# EUROPÄISCHE PATENTSCHRIFT

(11) **EP 0 514 680 B1**
(45) Veröffentlichungstag und Bekanntmachung des Hinweises auf die Patenterteilung: **28.06.1995**
(21) Anmeldenummer: 92107006.6
(22) Anmeldetag: 24.04.1992
(51) Int. Cl.: A47J 31/54, A47J 31/44, F24C 15/10, H05B 3/68, G05D 23/20

(54) **Temperatursensor für eine Brühgetränkezubereitungsmaschine**
Temperature sensor for beverage brewer
Capteur de température pour une cafetière

(30) Priorität: 22.05.1991 DE 4116617
(43) Veröffentlichungstag der Anmeldung: 25.11.1992
(73) Patentinhaber: Braun Aktiengesellschaft, Frankfurt am Main (DE)
(72) Erfinder: Schiebelhuth, Heinz, W-6000 Frankfurt am Main 50 (DE); Thomas, Walter, W-6070 Langen (DE)

(56) Entgegenhaltungen:
- EP-A- 0 348 298
- EP-A- 0 362 954
- DE-C- 3 736 517
- DE-U- 7 509 282
- FR-A- 2 135 412
- GB-A- 1 597 834
- US-A- 4 812 624
- PATENT ABSTRACTS OF JAPAN Bnd. 10, Nr. 286 (M-521)(2342) 27. September 1986 & JP-A-61 105 034 (MITSUBISHI ELECTRONIC CORP.)

## Beschreibung

Die Erfindung betrifft einen Temperatursensor nach dem Oberbegriff des Patentanspruchs 1.

Aus der DE-33 29 653 A1 ist eine Heizeinrichtung für einen Durchlauferhitzer einer Brühgetränkezubereitungsmaschine bekannt. Die von den bekannten Durchlauferhitzern neben der Erzeugung und der Zufuhr von heißem Wasser zur Aufbrüheinheit übernommene zweite Aufgabe, nämlich nach Beendigung des Aufbrühvorgangs die mittels einer Warmhalteplatte erfolgende geregelte Warmhaltung des erzeugten Brühgetränks ist Gegenstand mehrerer Schutzrechtsanmeldungen. Das grundsätzliche Problem der geregelten Warmhaltung besteht darin, daß die zum Ausgleich der Wärmeverluste, die das Brühgetränk im Auffangbehälter erfährt zugeführte Wärmemenge, die bei nur einigen 10 Watt liegen kann, ebenfalls vom Durchlauferhitzer erzeugt werden soll. Dieser weist aber eine für den Aufbrühbetrieb erwünschte relativ große Heizleistung auf, die bis über 1000 Watt liegen kann.

Um im zeitlichen Mittel mit einem derartigen Durchlauferhitzer eine vergleichsweise derart geringe Heizleistung zu erzeugen, besteht das Prinzip der geregelten Warmhaltung darin, daß der Durchlauferhitzer für eine relativ kurze Zeit in Betrieb genommen und danach wieder für eine relativ lange Zeit außer Betrieb gesetzt wird. Der Durchlauferhitzer wird dazu in bekannter Weise von einem mit ihm thermisch gekoppelten Thermostat dadurch ein- bzw. ausgeschaltet, daß der Thermostat bei Erreichen seiner Öffnungstemperatur die Spannungsversorgung des Durchlauferhitzers unterbricht bzw. nach entsprechender Abkühlung auf seine Schließtemperatur wieder herstellt.

Dies hat zur Folge, daß dem Brühgetränk von der Warmhalteplatte über den Boden des Auffangbehälters in relativ kurzer Zeit eine relativ große Wärmemenge zugeführt wird, was wiederum dazu führt, daß am Boden des Auffangbehälters ruhende Schichten des Brühgetränks merklich erhitzt werden, deshalb im Auffangbebehälter nach oben steigen und daß abgekühlte Schichten in Richtung Boden des Auffangbehälters absinken. Dadurch entsteht ein durch Kovektion gespeister Kreislauf innerhalb des Auffangbehälters, so daß im Ergebnis das gesamte Brühgetränk in etwa auf der erwünschten Durchschnittstemperatur warmgehalten werden kann. Dieser laufend stattfindende Zyklus von Erwärmung und nachfolgender Abkühlung beeinträchtigt aber insbesondere dann das Aroma des Brühgetränks, wenn es sich dabei um Kaffee handelt.

Zur Verminderung der Beeinträchtigung des Aromas von Kaffee, bei dessen geregelter Warmhaltung sind bereits verschiedene Vorschläge gemacht worden.

So ist für die Warmhaltung kleinerer Kaffeemengen vorgeschlagen worden, neben dem bereits vorhandenen Thermostat einen zweiten Thermostat mit niedrigerer Öffnungstemperatur vorzusehen, der mittels eines sogenannten "Kleinmengenschalters" in den Stromkreis für den Heizkörper des Durchlauferhitzers geschaltet werden kann, wodurch die vom Durchlauferhitzer im zeitlichen Mittel abgegebene Heizleistung verringert wird (vgl. DE 87 01 916 U1). Dabei wird allerdings auch im Aufbrühbetrieb die Heizleistung des Durchlauferhitzers verringert, was zu einer Verlängerung der Dauer des Aufbrühbetriebes führt, ohne daß damit nennenswerte vorteilhafte Auswirkungen auf das Aroma des Brühgetränks erzielt werden.

Ein anderer, wiederum für die Warmhaltung kleinerer Kaffeemengen gedachter Lösungsvorschlag besteht darin, durch Betätigung des Kleinmengenschalters eine Hilfsheizung in Betrieb zu nehmen. Diese beheizt dann den einzigen vorgesehenen Thermostaten, wenn sich dieser in seiner Offenstellung befindet, was zur Folge hat, daß sich die Zeitspanne, nach der der Thermostaten wieder in seine Schließstellung zurückkehrt, verlängert, so daß auch hier die im zeitlichen Mittel die an die Warmhalteplatte abgegebene Wärmemenge verringert wird (vgl. EP 0 186 097 A1).

Sowohl bei dem in der DE 87 01 916 U1 als auch In der EP 0 186 097 A1 beschriebenen Durchlauferhitzer muß zur Aktivierung der entsprechenden Schaltmittel für die Warmhaltung kleinerer Brühgetränkemengen neben dem Hauptschalter auch noch der Kleinmengenschalter betätigt werden, ohne dessen Betätigung das Brühgetränk im Warmhaltebetrieb relativ großen Temperaturschwankungen unterworfen ist. Der Benutzer muß also gegebenenfalls zwei Schaltmittel betätigen, was von diesem zum einen immer wieder vergessen wird und zum anderen dem Bedienungskomfort abträglich ist.

Eine nicht nur zur geregelten Warmhaltung kleinerer Mengen eines Brühgetränkes vorgesehene Vorrichtung ist in der DE 35 35 687 A1 offenbart. Im dort beschriebenen Durchlauferhitzer wird dessen Wärmeankopplung an die Warmhalteplatte auf mechanische Weise dadurch beeinflußt, daß über ein Bimetallelement der Abstand zwischen Durchlauferhitzer und Warmhalteplatte derart geregelt wird, daß dieser bei sehr heißem Durchlauferhitzer größer ist als bei weniger heißem Durchlauferhitzer. Dadurch wird die vom Durchlauferhitzer an die Warmhalteplatte abgegebene Wärmemenge verstetigt, d.h., die Maxima der abgegebenen Wärmeleistung werden abgeflacht und die Minima angehoben.

Ein gemeinsamer Nachteil aller vorstehend genannter Maßnahmen zur Verminderung der Aromaschädigung des Brühgetränks besteht darin, daß als Kriterium für die Regelung des Durchlauferhitzer die Temperatur des an ihn thermisch angekoppelten Thermostaten verwendet wird, von der angenommen wird, daß sie die tatsächlichen Temperaturverhältnisse innerhalb des In dem Auffangbehälters sich befindlichen Brühgetränks einigermaßen korrekt wiederspiegelt. Darüber hinaus weisen sämtliche der beschriebenen Thermostaten eine relativ große Hysterese auf, d.h., ihre Öffnungstemperatur, bei der sie die Spannungsversorgung des elektrischen Heizkörpers des Durchlauferhitzers unterbrechen, kann durchaus um 10 oder mehr Grad Celsius über ihrer Schließtemperatur liegen, bei der sie den elektrischen Heizkörper wieder mit der Spannungsversorgung verbinden. Auch diese Eigenschaft der verwendeten Thermostaten trägt wesentlich zu der beschriebenen Unstetigkeit der vom Durchlauferhizter im Warmhaltebetrieb pro Zeiteinheit an die Warmhalteplatte abgegebenen Wärmemengen bei.

Aus der US-A-4,812,624 ist weiterhin ein Tempertaursensor der eingangs beschriebenen Art bekannt, der für die Temperaturmessung des in einem Auffangbehälter einer Brühgetränkemaschine befindlichen Brühgetränks geeignet ist, wobei dieser dann ebenfalls an der Außenseite des Auffangbehälters anliegt. Der Temperatursensor wird hier zwischen mehreren Isolierscheiben und einer zusätzlichen Spiralfeder so geführt, daß dieser stets mit Vorspannung an der Außenfläche des Auffangbehälters anliegt und so die Temperatur des Auffangbehälters - und somit die Temperatur der darin befindlichen Flüssigkeit - verhältnismäßig genau ermitteln kann.

Aus der EP-A-348 298 ist schließlich noch ein Temperatursensor für ein Heizgerät bekannt, der ebenfalls mit seiner Fühlersptizte an der Außenfläche eines Gefäßes mit Vorspannung anliegt, wobei die Vorspannung durch eine auf den Temperatursensor einwirkende Feder erzielt wird. Der Temperatursensor wird dabei direkt im Gehäuse des Geräts geführt und stellt somit eine thermische Kopplung zum Gehäuse her, was letztendlich zu Fehlmessungen führen kann. Eine Abdichtung des Temperatursensors gegenüber dem Gehäuse ist nicht vorgesehen.

Es ist daher Aufgabe der Erfindung, einen Temperatursensor nach dem Oberbegriff des Patentanspruchs 1 zu schaffen, der einfach und kostengünstig in einer Heizplatte integrierbar ist, der stets an der Oberfläche des Auffangbehälters anliegt, der auf Temperaturschwankungen im Brühgetränk schnell reagiert und der gleichzeitig gegenüber der Heizplatte mit einfachen Mitteln abgedichtet ist.

Für einen Temperatursensor nach dem Oberbegriff des Patentanspruchs 1 erfolgt die Lösung dieser Aufgabe durch die im kennzeichnenden Teil dieses Patentanspruchs aufgeführten Merkmale.

Durch den im Gehäuse einer Getränkezubereitungsmaschine verschiebbar angeordneten Temperatursensor, der, wenn der Auffangbehälter auf der Warmhalteplatte abgestellt ist, unter einer zum Auffangbehälter hingerichteten Spannkraft stets an der Oberfläche des Auffangbehälters anliegt, wird erreicht, daß dieser stets in gutem Wärmekontakt mit dem Auffangbehälter steht. Dadurch, daß bei der Herstellung von aus Glas geformten Auffangbehältern verhältnismäßig große Maßabweichungen entstehen können, was auch für die in einer Getränkezubereitungsmaschine vorhandenen Bauteile zutrifft, wird nach der Erfindung erreicht, daß derartige Maßabweichungen ausgeglichen werden. Der Temperatursensor steht also jeder Zeit infolge seiner gegen den Auffangbehälter gerichteten Anliegekraft mit diesem in Berührungskontakt. Hierdurch läßt sich insbesondere im Warmhaltebetrieb das im Auffangbehälter befindliche Getränk besonders gut thermisch abtasten und es kann entsprechend genau die den Auffangbehälter beheizende Heizeinrichtung gesteuert werden. Weiterhin läßt sich hierdurch das im Auffangbehälter befindliche Brühgetränk besonders aromaschonend in kleinen Aufheizetappen aufheizen.

Durch den erfindungsgemäßen Temperatursensor wird der Vorteil erreicht, daß das Gewicht des Auffangbehälters, ob leer oder gefüllt, den Temperatursensor axial in die Warmhalteplatte hinein verschiebt und dadurch dieser immer an der Auflagefläche des Auffangbehälters anliegt. Diese Ausführungsform des erfindungsgemäßen Temperatursensors bietet den Vorteil, daß der Temperatursensor nicht im Gehäuse der Brühgetränkezubereitungsmaschine sondern direkt über das Halteelement in der Warmhalteplatte verschiebbar gelagert ist. Hierdurch kann die Maßtoleranz, die nach dem Einbau des Temperatursensors in der Warmhalteplatte zwischen der Anlagefläche des Temperatursensors und der Oberseite der Warmhalteplatte entsteht, besonders klein gehalten werden, was einem größeren Verschiebeweg für den Temperatursensor zugute kommt.

Bei dem Temperatursensor wird auf einfache und kostengünstige Weise durch ein Gummi- oder elastisches Kunststoffelement sowohl die notwendige thermische Restkoppelung zwischen Warmhalteplatte und Thermofühler als auch eine sichere Halterung für den Temperatursensor erreicht. Außerdem läßt sich das ohnehin preiswerte elastische Halteelement gleichzeitig auch noch zur Abdichtung des unter der Warmhalteplatte liegenden Sockels der Brühgetränkemaschine verwenden.

Die Ausbildung des Temperaturfühlers als NTC-Widerstand ergibt nach Anspruch 3 den Vorteil, daß dieser den Strom in der Heizeinrichtung ansteigen läßt, wenn das Brühgetränk abkühlt. Derartige Widerstände sind besonders preiswert und verhindern komplizierte Temperaturregeleinrichtungen.

Durch die Wärmeleitpaste wird eine großflächige Wärmekontaktfläche an der metallischen Hülse erreicht wird, so daß der Temperatursensor bereits auf geringe Temperaturschwankungen reagiert.

Der erfindungsgemäße Temperatursensor bietet den Vorteil, daß das Halteelement gleichzeitig die Funktion einer Feder übernimmt. Dies erspart ein zusätzliches Bauteil. Dieser Vorteil wird noch dadurch verbessert, daß das Halteelement ein Balg ist, der zusätzlich noch die Öffnung gegenüber dem Temperatursensor und der Warmhalteplatte abdichtet, so daß an der Öffnung kein Schmutz und Wasser in das Sockelinnere, wo Stromleitungen und Schaltkreise liegen können, eindringen kann. Weiterhin ist ein derartiger Balg leicht herstellbar und kann ohne zusätzliche Befestigungsmittel in der Öffnung und an dem Temperatursensor unter radialer Vorspannung aufgezogen werden (Anspruch 2).

Durch die Merkmale des Anspruchs 3 läßt sich der NTC-Widerstand besonders einfach und schnell ohne zusätzliche Befestigungsmittel in der Hülse montieren. Die Wärmeleitpaste sorgt hier, zusätzlich zur guten Wärmeübertragung, auch noch für eine leichte und unkomplizierte Befestigung der Haltearme am NTC-Widerstand.

Im folgenden wird ein Ausführungsbeispiel der Erfindung anhand der Zeichnung näher beschrieben. Es zeigen:
- Fig. 1: einen Schnitt durch einen Durchlauferhitzer mit daraufstehendem Auffangbehälter samt seiner Halterung im Sockel einer Brühgetränkezubereitungsmaschine wobei der erfindungsgemäße Temperatursensor lediglich in Seitenansicht dargestellt ist und
- Fig. 2: ein Längsschnitt durch den Temperatursensor nach Fig. 1, wobei die Befestigung des Temperatursensors links der Mittellinie durch Haltearme und rechts der Mittellinie durch eine Halbschale dargestellt ist.

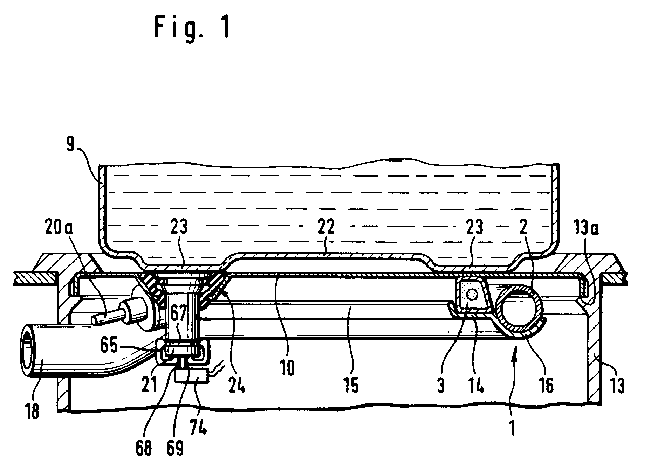

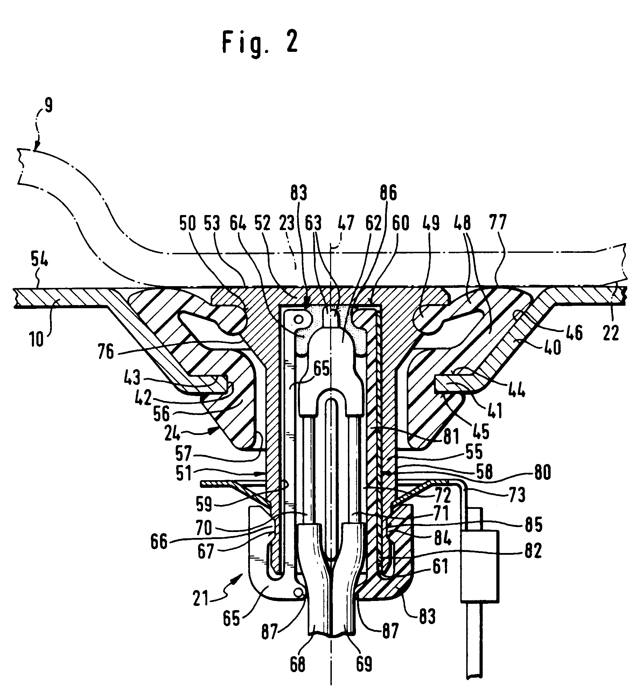

Gemäß Fig. 1 ist die Warmhalteplatte 10 an ihrem Rand mit dem Sockel 13 des Geräts zur Herstellung von Brühgetränken verbunden, was mit Rastlementen 13a erfolgen kann. Da die Warmhalteplatte 10 mit der elektrischen Heizeinrichtung 3 und diese wiederum über den Steg 14 und das Blech 15 mit dem Wasserrohr 2 verbunden ist, wird durch die Verbindungsmittel 13a auch der gesamte Durchlauferhitzer 1 im Sockel 13 gehaltert. Auf der Warmhalteplatte 10 steht der zylinderförmige und aus Glas bestehende Auffangbehälter 9, der an seinem Boden eine Einbuchtung 22 aufweist, wodurch zusammen mit seiner Formgebung am Rand des Bodens eine kreisringförmige Auflagefläche 23 für den Aufnahmebehälter 9 auf der Warmhalteplatte 10 entsteht. Die Lage der Auflagefläche 23 ist dabei so gewählt, daß sie über weite Bereiche der Form des elektrischen Heizkörpers 3 folgt. Lediglich in dem durch die hufeisenförmige Gestalt des Durchlauferhitzers 1 bedingten, offenen Bereich zwischen den elektrischen Anschlüssen 20a und 20b (dahinter liegend) des elektrischen Heizkörpers 3, in dem der Temperatursensor 21 liegt, besteht keine Übereinstimmung zwischen dem räumlichen Verlauf der Auflagefläche 23 und dem des elektrischen Heizkörpers 3. Hier berührt vielmehr der durch die Warmhalteplatte 10 von unten hindurchtretende (vgl. Fig. 2) und in dieser in einem in Fig. 1 nur schematisch dargestellten Halteelement 24 gelagerter Temperatursensor 21 die Auflagefläche 23.

Auf diese Weise wird dafür gesorgt, daß zum einen vom elektrischen Heizkörper 3 ausgehende Wärme über die Warmhalteplatte 10 gezielt in den ein Brühgetränk enthaltenden Auffangbehälter 9 gelangt und zum anderen der Temperatursensor 21 über die Auflagefläche 23 ebenfalls in gutem Wärmekontakt mit dem Brühgetränk steht. Wie wiederum anhand der Beschreibung der Fig. 2 noch näher ausgeführt werden wird, ist die Wärmekoppelung zwischen dem Temperatursensor 21 und der Warmhalteplatte 10 wesentlich geringer als die zwischen Temperatursensor 21 und Auflagefläche 23.

In Fig. 2 ist ein Längsschnitt durch den Temperatursensor 21 im Bereich seiner Befestigung an der Warmhalteplatte 10 dargestellt, wobei er sich in seiner von der Auflagefläche 23 des Auffangbehälters 9 in der Zeichnung nach unten gedrückten Stellung befindet. Die aus Stahlblech ausgestanzte und vorzugsweise im Tiefziehverfahren hergestellte Warmhalteplatte 10 weist einen in der Zeichnung nach unten verlaufenden kegelstumpfförmigen Abschnitt 40 als Vertiefung auf, der sich nach unten verjüngt und der an einem Ringbund 41 endet. Der Ringbund 41 bildet eine Öffnung 42, in die ein mit einer Ringnut 43 versehenes Halteelement 24 derart eingeknöpft ist, daß die stirnseitigen Ringflächen 44, 45 den Ringbund 41 hintergreifen, wodurch das Halteelement 24 ortsfest in der Öffnung 42 gehalten wird.

Das Halteelement 24 wird von einem Gummielement oder einem gegen Temperatur resistenten Kunststoff, beispielsweise Silikon oder Teflon, gebildet. Entlang der inneren Wandung 46 des kegelstumpfförmigen Abschnitts 40 verläuft das Halteelement 24 in Fig. 2 nach oben und ist in Höhe der Warmhalteplatte 10 zur Mitte 47 hin derart umgebogen, daß seine Oberkante 77 nicht an der Oberseite 54 der Warmhalteplatte 10 hervorsteht. Der Endbereich 48 des Halteelements 24 bildet die Funktion eines Balges. Das abgeknickte Ende des Balges 48 wird vom einen Ringwulst 49 gebildet, der mit radialer Vorspannung in eine an der topfförmig ausgebildeten Hülse 51 vorgesehene Ringnut 50 eingreift. Zwecks guter Wärmeleitung wurde für die Hülse 51 als Werkstoff vorzugsweise Aluminium gewählt.

Wie aus Fig. 2 deutlich zu erkennen ist, wird der Temperatursensor 21 mit der Hülse 51 von dem Halteelement 24 getragen und wird in der in Fig. 2 dargestellten Position mit einer Spannkraft gegen die Auflagefläche 23 des Auffangbehälters 9 gedrückt, damit ein guter Wärmeübergang von der Auflagefläche 23 des Auffangbehälters 9 zum Temperatursensor 21 geschaffen wird. Damit die Hülse 51 mit einer vorgegebenen Spannkraft gegen die Auflagefläche 23 drückt, übt der Balg 48 auf die Hülse 51 nach Fig. 2 eine nach oben gerichtete Spannkraft auf. Die Spannkraft wird durch die beim Herunterdrücken des Temperatursensors 21 im Balg 48 entstehende Biegeverformung erreicht. Wird nämlich der Auffangbehälter 9 von der Warmhalteplatte 10 entfernt, so bewegt sich der Temperatursensor 21 infolge der im Balg 48 gespeicherten Biegespannung in der Zeichnung nach oben so weit heraus, bis die Biegespannung im Balg 48 nahezu aufgehoben ist.

Im Ausgangszustand des Halteelements 24 sind der Ringwulst 49 und der an ihn angrenzende Balgbereich in der Zeichnung nach oben gerichtet und das Halteelement 24 nimmt nahezu die Form ein, die es nach seiner Ausformung der Herstellung aufweist. Wenn also kein Druck auf den Bodenbereich 52 der Hülse 51 in der Zeichnung nach unten ausgeübt wird, ragt die mit der Auflagefläche 23 des Auffangbehälters 9 in Kontakt bringbare Anlagefläche 53 an der Oberseite 54 der Warmhalteplatte 10 hervor, was aber in Fig. 2 nicht erkennbar ist, da hier gerade die Auflagefläche den Temperatursensor 29 gegen die im Balg 48 gebildete Biegekraft nach unten führt.

An der Stelle, an der die Ringnut 50 an der Hülse 51 gemäß Fig. 2 ausgebildet ist, verjüngt sich diese im äußeren Mantelbereich 76 kegelförmig nach unten, an den sich dann ein rohrförmiger Abschnitt 55 anschließt. Der von der Ringnut 43 gebildete Ringabschnitt 56 weist eine Durchgangsbohrung 57 auf, die mit geringem Abstand konzentrisch zu der Mantelfläche 58 des rohrförmigen Abschnitts 55 der Hülse 51 verläuft, damit die Hülse 51 reibungsfrei in dem Halteelement 24 axial verschiebbar ist. Dies ist erforderlich, da die im Balg 48 bei seiner Verformung entstehenden Biegekräfte, die eine axiale Verschiebung längs der Mitte 47 ermöglichen, verhältnismäßig gering sind. Auf alle Fälle darf diese Spannkraft nicht größer sein als das Gewicht des Auffangbehälters 9 wenn in ihm keine Flüssigkeit aufbewahrt wird; sie muß allerdings immer so groß sein, daß, sobald der Auffangbehälter 9 von der Warmhalteplatte 10 entfernt, der Temperatursensor 21 sich in Fig. 2 nach oben bewegt und seine Anlagefläche 53 gegenüber der Oberseite 54 der Warmhalteplatte 10 hervorsteht.

Die Hülse 51 weist nach Fig. 2 eine Sacklochbohrung 59 auf, deren horizontal verlaufender Boden 60 im Bodenbereich 52 also nahe der Anlagefläche 53 ausgebildet ist. In das offenen Ende 61 der Sacklochbohrung 59, das unterhalb des Ringabschnittes 56 des Halteelements 24 angeordnet ist, ist ein als NTC-Widerstand ausgebildetes temperaturempfindliches Element 62 soweit eingeschoben, daß sein an der Spitze hervorstehender Zapfen 63 am Boden 60 anschlägt und somit einen guten Wärmeübergang vom Bodenbereich 42 zum NTC-Widerstand 62 verstellt.

In Fig. 2 ist an dem temperaturempfindlichen Bereich, also um den Zapfen 63 herum, auf der Oberfläche des NTC-Widerstandes 62 eine Wärmeleitpaste 64 angebracht, die in gutem Wärmekontakt mit dem Boden 60 und dem NTC-Widerstand steht, so daß durch den großflächigen Berührungskontakt das temperaturempfindliche Element 62 besonders schnell auf Temperaturschwankungen reagiert. An der Wärmeleitpaste 64 sind diametral gegenüberliegende Haltearme 65 angebracht, wovon nur der eine links von der Mittellinie 47 zu erkennen ist. Um zwei Befestigungsmöglichkeiten in einer einzigen Fig. 2 dazustellen, wurde also links ein Haltearm 65 und rechts der Mittellinie 47 eine Halbschale 81 dargestellt. In dem einen Ausführungsbeispiel sind also zwei diametral gegenüberliegende Haltearme 65 und im anderen Ausführungsbeispiel zwei diametral gegenüberliegende Halbschalen 81 als Befestiungsmittel für den Sensor 62 vorhanden. Die Haltearme 65 erstrecken sich entlang der Sacklochbohrung 59 und übergreifen an ihrem offenen Ende 61 den röhrförmigen Abschnitt 55 der Hülse 51. Dort sind an ihnen angeformte Rastelemente 66 ausgebildet, die federnd in an der Mantelfläche 58 des rohrförmigen Abschnitts 57 ausgebildete Vertiefungen 67 rastend eingreifen, wodurch das temperaturempflindliche Element 62 sicher auf Anlage an dem Boden 60 in der Sacklochbohrung 59 gehalten wird, wie dies Fig. 2 deutlich zeigt. Der NTC-Widerstand 62 ist über zwei Leitungen 70, 71 mit einem Schaltkreis (nicht dargestellt) verbunden.

Bei der rechts der Mittellinie 47 ausgebildeten Befestigung des Temperatursensors 62 in der metallischen Hülse 51 wird dieser von zwei Halbschalen 81 (nur die rechte Halbschale ist dargestellt) umschlossen, die so eine Hülse 80 bilden. Zum Zusammenhalten der so geschaffenen Hülse 80 dient ein aus Kunststoff oder Teflon gebildetes, sehr dünnes Rohr 82, um die Wärmeleitung von der metallischen Hülse 51 zum Temperatursensor 66 nicht zu beeinträchtigen. An dem in Fig. 2 rechts von der Mittellinie 47 dargestellten unteren offenen Ende 61 der metallischen Hülse 51 ragen jeweils an den Halbschalen 81 angebrachte Haltearme 83 heraus, die am Ende der metallischen Hülse 51 über in eine Nut 85 der metallischen Hülse 51 eingreifende Rastelemente 84 ortsfest mit dieser verbunden sind. Die Befestigung und Montage des Temperatursensors 62 in der metallischen Hülse 51 ist mittels dieses Ausführungsbeispiels besonders einfach.

In Fig. 2 verläuft rechts von der Mittellinie 47 am oberen Ende des Temperatursensors 62 der Zapfen 63 nicht bis zum Boden 60, sondern er ist von der Wärmeleitpaste 64 umgeben, die vor Montage in die Öffnung 86 der von den Halbschalen 81 gebildeten Hülse 80 eingebracht wird. Die rechte Ausführung in Fig. 2 bietet gegenüber der linken Ausführung den Vorteil, daß der Temperatursensor 51 durch die Halbschalen (81) besser zentriert wird.

Am Ausgang der Leitungen 70, 71 sind in Fig. 2 diese mit einer Isolierung 68, 69 versehen und werden von einem die Haltearme 65 bzw. die Halbschalen 81 verbindenden Ringbund 87 dicht umschlossen, so daß Schmutz und Feuchtigkeit nicht in den von der Sacklochbohrung lochbohrung 59 gebildeten Raum 72 eindringen kann. Weiterhin ist der rohrförmige Abschnitt 55 der Hülse 51 mit einem Erdanschluß 73 verbunden, damit eine Bedienungsperson, falls sie einmal die Anlagefläche 53 des Temperatursensors 21 berührt, nicht unter Spannung gesetzt wird.

Der Schalter 74 in Fig. 2 dient dazu, daß, wenn kein Auffangbehälter 9 auf der Warmhalteplatte 10 abgestellt ist, also der Temperatursensor 21 aus dem Gehäuse 10 der Brühgetränkezubereitungsmaschine in seine Ausgangsstellung herausgefahren ist und wenn die Brühgetränkezubereitungsmaschine noch nicht eingeschaltet ist, auch durch Einschalten des Hauptschalters der Brühgetränkezubereitungsmaschine der Durchlauferhitzer 1 nicht in Betrieb gesetzt wird. Dies wird durch die Offenstellung des Schalters 74 und das dadurch im Mikrokontroller (nicht dargestellt) bedingte Aus-Signal erreicht, so daß der Mikrokontroller ein Einschalten der Brühgetränkezubereitungsmaschine nicht zuläßt.

Wird im anderen Falle während der Aufbrühphase der Auffangbehälter 9 von der Warmhalteplatte 10 entfernt, so wird auch hier durch Verschiebung des Temperatursensors 21 der Schalter 74 unterbrochen und ein Signal dem Mikrokontroller zugeführt, der dieses dann derart verarbeitet, daß der Durchlauferhitzer 1, obwohl der Hauptschalter bei 25 noch eingeschaltet ist, dennoch abgeschaltet wird. Sobald der Auffangbehälter 9 wieder auf die Warmhalteplatte 10 aufgesetzt wird (Fig. 2), leitet durch Kurzschließen des Schalters 74 dieser ein Signal dem Mikrokontroller zu, der dann den Durchlauferhitzer 1 wieder einschaltet und der Brühvorgang fortgesetzt wird.

Befindet sich hingegen die Brühgetränkezubereitungsmaschine bereits im Warmhaltebetrieb, so wird ebenfalls beim Herunternehmen des Auffangbehälters 9 von der Warmhalteplatte 10 durch die axiale Verschiebung des Temperatursensors 21 der Schalter 74 geöffnet und das Signal dem Mikrokontroller zugeleitet, der dann durch eine im Mikrokontroller vorgesehene Schaltungsanordnung den Durchlauferhitzer 1, beispielsweise 10 Minuten lang, noch mit elektrischer Energie versorgt. Wird in dieser Zeit der Auffangbehälter 9 nicht auf die Warmhalteplatte 10 aufgesetzt, so wird durch den Mikrokontroller das Ausschalten der Brühgetränkezubereitungsmaschine veranlaßt.

Wird vor Ablauf dieser Warmhaltezeit der Auffangbehälter 9 wieder auf die Warmhalteplatte 10 aufgesetzt, so bleibt der Durchlauferhitzer 1 weiterhin eingeschaltet und wird durch einen die Temperatur des Durchlauferhitzers 1 steuernden, weiteren Thermostaten (nicht dargestellt) temperaturgesteuert. Die zuletzt genannte Steuerung, die sich im Warmhaltebetrieb ergibt, arbeitet unabhängig von der Restkopplung, so daß, wenn durch die Restkopplung der Tempratursensor 21 in kürzerer Zeit reagiert, bevor die 10 Minuten Wartezeit abgelaufen ist, dieser die Ausschaltung des Durchlauferhitzers 1 bewirkt.

## Patentansprüche

1. Temperatursensor (21) zur Temperaturmessung des in einem Auffangbehälter (9) einer Brühgetränkezubereitungsmaschine befindlichen Brühgetränks, wobei der Boden (23) des Auffangbehälters (9) in thermischem Kontakt mit einer durch eine Heizeinrichtung (3) elektrisch beheizten Warmhalteplatte (10) steht, wobei der Temperatursensor (21) die Temperatur an der Außenseite des Auffangbehälters (9) abgreift und somit die Heizeinrichtung (3) mittels eines von dem Temperatursensor (21) abgegebenen elektrischen Signals temperaturabhängig steuert, wobei der thermische Kontakt zwischen dem Auffangbehälter (9) und dem Temperatursensor (21) gegenüber dem thermischen Kontakt zwischen dem Temperatursensor (21) und der Warmhalteplatte (10) eindeutig dominierend ist und wobei der Temperatursensor (21) in einer Aussparung (40) der Warmhalteplatte (10) derart axial verschiebbar geführt ist, daß der Temperatursensor (21) bei auf der Warmhalteplatte (10) abgestelltem Auffangbehälter (9) an diesem unter einer zum Auffangbehälter (9) hingerichteten Spannkraft anliegt, so daß sich der Temperatursensor (21) in gutem Wärmekontakt mit dem Auffangbehälter (9) befindet,
**dadurch gekennzeichnet,**
daß die durch Wärmeleitung bedingte thermische Restkoppelung zwischen Temperatursensor (21) und Warmhalteplatte (10) durch ein aus Gummi- oder Kunststoff hergestelltes Halteelement (24) erreicht wird, welches einerseits selbst in der Warmhalteplatte (10) dichtend gelagert ist und andererseits den beweglichen Temperatursensor (21) führt und dichtend umgreift und daß das Halteelement (24) einen Bereich (48) aufweist, in dem bei seiner elastischen Verformung durch die Verschiebung des Temperatursensors (21) die auf den Temperatursensor (21) einwirkende Spannkraft selbst erzeugt wird.

2. Temperatursensor nach Anspruch 1,
**dadurch gekennzeichnet,**
daß der Temperatursensor (21) aus einem elektrischen Thermofühler (62) und einem den Thermofühler (62) aufnehmenden metallischen Körper (51) besteht, mit dem er in gutem Wärmekontakt steht, daß der eine Endbereich (48) des Halteelements (24) einen Ringwulst (49) aufweist, der mit radialer Vorspannung in eine an dem metallischen Körper (51) vorgesehene Ringnut (50) eingreift und daß der andere Endbereich einen Ringabschnitt (56) aufweist, der in die Öffnung (42) der Warmhalteplatte (10) eingeknöpft ist.

3. Temperatursensor nach Anspruch 2,
**dadurch gekennzeichnet,**
daß der metallische Körper (51) aus einer zum Boden des Auffangbehälters (9) hin verschlossenen Hülse (51) besteht, daß der Thermofühler (62) ein NTC-Widerstand ist und daß der gute Wärmekontakt zwischen der Hülse (51) und dem NTC-Widerstand (62) durch deren Auffüllen mit einer Wärmeleitpaste (64) hergestellt wird.

4. Temperatursensor nach Anspruch 3,
**dadurch gekennzeichnet,**
daß an der Wärmeleitpaste (64) Haltearme (65) angebracht sind, die die metallische Hülse (55) nach außen durchdringen und die über an ihnen angebrachten Rastelementen (66) federnd an an der Mantelfläche (58) der metallischen Hülse (55) ausgebildeten Vertiefungen (67) eingreifen.

5. Temperatursensor nach Anspruch 3,
**dadurch gekennzeichnet,**
daß der Temperatursensor (62) von zwei eine Hülse (80) bildenden Halbschalen (81) umgeben ist, daß die Halbschalen (81) von einem Rohr (82) umschlossen sind, daß die Hülse (80) am stirnseitigen offene Ende (83) von der Wärmeleitpaste (64) verschlossen ist und daß der NTC-Widerstand (62) in der Wärmeleitpaste (64) eingebettet ist.

6. Temperatursensor nach Anspruch 5,
**dadurch gekennzeichnet,**
daß an den Halbschalen (81) am offenenen Ende (61) der Hülse (51) diametral gegenüberliegende Haltearme (83) angeordnet sind, daß die Haltearme (83) die Hülse (51) von außen umgreifen und daß die Haltearme (83) über an ihren angebrachten Rastelementen (84) federnd in an der Mantelfläche (58) der metallischen Hülse (55) ausgebildeten Vertiefungen (67) eingreifen.

## Claims

1. A temperature sensor assembly (21) for measuring the temperature of a brewed beverage contained in a collection container (9) of an apparatus for brewing beverages, with the bottom (23) of the collection container (9) being in thermal contact with a warming plate (10) heated electrically by a heating device (3), said temperature sensor (21) detecting the temperature on the outside of the collection container (9), thus controlling the heating device (3) by means of an electrical signal delivered by the temperature sensor (21) in dependence on the temperature, said thermal contact between the collection container (9) and the temperature sensor (21) clearly prevailing over the thermal contact between the temperature sensor (21) and the warming plate (10), and the temperature sensor (21) being axially slidably guided in a recessed portion (40) of the warming plate (10), such that the temperature sensor (21), with the collection container (9) placed down on the warming plate (10), is urged into abutting engagement with the collection container by a biasing force acting in the direction of the collection container (9), causing the temperature sensor (21) to be in good thermal contact with the collection container (9),
**characterized in that** the remainder of the thermal contact between the temperature sensor (21) and the warming plate (10) caused by heat conduction is provided by a holding member (24) made of a rubber or plastics material which, on the one hand, is sealingly mounted in the warming plate (10) and, on the other hand, guides and sealingly encompasses the movable temperature sensor (21), and that the holding member (24) includes a portion (48) in which the biasing force acting on the temperature sensor (21) is produced as the holding member is elastically deformed by displacement of the temperature sensor (21).

2. The temperature sensor assembly as claimed in claim 1,
**characterized in that** the temperature sensor assembly (21) is comprised of an electric temperature-detecting element (62) and a metal body (51) which receives said temperature-detecting element (62) and with which it is in good thermal contact, that the one end portion (48) of the holding member (24) includes an annular bead (49) radially biased into engagement with an annular groove (50) provided on the metal body (51), and that the other end portion includes an annular section (56) engaged within the opening (42) of the warming plate (10).

3. The temperature sensor assembly as claimed in claim 2,
**characterized in that** the metal body (51) is comprised of a sleeve (51) closed relative to the bottom of the collection container (9), that the temperature-detecting element (62) is an NTC resistor, and that the good thermal contact between the sleeve (51) and the NTC resistor (62) is established by filling the space therebetween with a heat-conducting paste (64).

4. The temperature sensor assembly as claimed in claim 3,
**characterized in that** retaining arms (65) are provided on the heat-conducting paste (64), said arms extending to the outside through the metal sleeve section (55) and having detent means (66) for resiliently engaging within recesses (67) provided on the outer circumferential surface (58) of the metal sleeve section (55).

5. The temperature sensor assembly as claimed in claim 3,
**characterized in that** the temperature-detecting element (62) is surrounded by two half shells (81) providing a sleeve (80), that the half shells (81) are enclosed by a tube (82), that the sleeve (80) has its open end (83) sealed by the heat-conducting paste (64), and that the NTC resistor (62) is embedded in the heat-conducting paste (64).

6. The temperature sensor assembly as claimed in claim 5,
**characterized in that** diametrically opposite retaining arms (83) are arranged on the half shells (81) at the open end (61) of the sleeve (51), that said retaining arms (83) embrace the sleeve (51) from outside, and that said retaining arms (83) are provided with detent means (84) for resilient engagement with recesses (67) provided on the outer circumferential surface (58) of the metal sleeve section (55).

## Revendications

1. Détecteur de température (21) pour mesurer la température d'une boisson située dans un récipient de collecte (9) d'une machine pour préparer des boissons chaudes, le fond (23) du récipient de collecte (9) étant en contact thermique avec un plateau de maintien en température (10) réchauffé électriquement par un dispositif de chauffage (3), le détecteur de température (21) captant le température sur la face extérieure du récipient de collecte (9) et commandant ainsi en température le dispositif de chauffage (3) au moyen d'un signal électrique envoyé par le détecteur de température (21), le contact thermique entre le récipient de collecte (9) et le détecteur de température (21) étant clairement dominant par rapport au contact thermique entre le détecteur de température (21) et le plateau de maintien en température (10), et le détecteur de température (21) étant guidé de façon axialement mobile dans un évidement (40) du plateau de maintien en température (10), de telle sorte que le détecteur de température (21), lorsque le récipient de collecte (9) est posé sur le plateau de maintien en température (10), s'appuie contre ce récipient sous une précontrainte dirigée vers le récipient de collecte (9), de sorte que le détecteur de température (21) se trouve en bon contact thermique avec le récipient de collecte (9),
caractérisé en ce que
l'accouplement final provoqué par la conduction thermique entre le détecteur de température (21) et le plateau de maintien en température (10) est atteint par un élément de retenue (24) fabriqué en une matière plastique ou en caoutchouc, qui est d'une part lui-même monté de façon étanche dans le plateau de maintien en température (10) et qui guide d'autre part le détecteur de température (21) mobile et l'entoure de façon étanche, et en ce que l'élément de retenue (24) présente une région (48) dans laquelle, grâce à la déformation élastique de celle-ci par le déplacement du détecteur de température (21), se produit la précontrainte elle-même qui agit sur le détecteur de température (21).

2. Détecteur de température selon la revendication 1,
caractérisé en ce que
le détecteur de température (21) est constitué par un détecteur électrique (62) et un corps métallique (51) recevant le détecteur thermique (62), avec lequel il se trouve en bon contact thermique, en ce qu'une des régions d'extrémité (48) de l'élément de retenue (24) présente un bourrelet annulaire (49) qui s'engage sous précontrainte radiale dans une gorge annulaire (50) prévue sur le corps métallique (51), et en ce que l'autre région d'extrémité présente une section annulaire (56) qui est boutonnée dans l'ouverture (42) du plateau de maintien en température (10).

3. Détecteur de température selon la revendication 2,
caractérisé en ce que
le corps métallique (51) est constitué par une douille (51) refermé vers le fond du récipient de collecte (9), en ce que le détecteur thermique (62) est une résistance NTC (à coefficient de température négatif), et en ce que le bon contact thermique entre la douille (51) et la résistance NTC (62) est produit par leur remplissage avec une pâte conductrice de la chaleur (64).

4. Détecteur de température selon la revendication 3,
caractérisé en ce que
sur la pâte conductrice de la chaleur (64) sont montés des bras de retenue (65) qui traversent la douille métallique (55) vers l'extérieur et qui s'engagent élastiquement via des éléments d'enclenchement (66) fixés sur ceux-ci dans les cavités (67) réalisées sur la surface enveloppe (58) de la douille métallique (55).

5. Détecteur de température selon la revendication 3,
caractérisé en ce que
le détecteur de température (62) est entouré par deux demi-coquilles (81) qui forment une douille (80), en ce que les demi-coquilles (81) sont entourées par un tube (82), en ce que la douille (80) est refermée à l'extrémité ouverte (83) du côté frontal par une pâte conductrice de la chaleur (64), et en ce que la résistance NTC (62) est noyée dans la pâte conductrice de la chaleur (64).

6. Détecteur de température selon la revendication 5,
caractérisé en ce que des bras de retenue (83) situés de façon diamétralement opposée sont agencés sur les demi-coquilles (81) à l'extrémité ouverte (61) de la douille (51), en ce que les bras de retenue (83) entourent la douille (51) depuis l'extérieur, et en ce que les bras de retenue (83) s'engagent élastiquement, via des éléments d'enclenchement (84) montés sur ceux-ci, dans des cavités (67) réalisées sur la surface enveloppe (58) de la douille métallique (55).
